# EUROPÄISCHE PATENTSCHRIFT

(11) **EP 3 802 164 B1**
(45) Veröffentlichungstag und Bekanntmachung des Hinweises auf die Patenterteilung: **02.02.2022**
(21) Anmeldenummer: 19746018.1
(22) Anmeldetag: 15.07.2019
(51) Int. Cl.: B60D 1/62, B61C 5/00, F16L 11/20

(54) **FAHRZEUG UND BETRIEBSVERFAHREN FÜR EIN FAHRZEUG**
VEHICLE AND METHOD FOR OPERATING A VEHICLE
VÉHICULE ET PROCÉDÉ DE FONCTIONNEMENT D'UN VÉHICULE

(30) Priorität: 18.07.2018 DE 102018211989
(43) Veröffentlichungstag der Anmeldung: 14.04.2021
(73) Patentinhaber: Siemens Mobility GmbH, 81739 München (DE)
(72) Erfinder: PAPAIORDANIDIS, Nikolaos, 91054 Erlangen (DE); PEYMANDAR, De-Niang Maria, 41199 Mönchengladbach (DE); RUCKES, Jonas, 91058 Erlangen (DE)
(86) Internationale Anmeldenummer: PCT/EP2019/068955
(87) Internationale Veröffentlichungsnummer: WO 2020/016152

(56) Entgegenhaltungen:
- DE-A1-102008 039 911
- JP-A- 2004 060 975
- US-A1- 2014 033 738
- US-A1- 2016 297 451

## Beschreibung

Es wird ein Fahrzeug angegeben. Darüber hinaus wird ein Betriebsverfahren für ein Fahrzeug angegeben.

Die Druckschrift EP 2 924 793 A1 betrifft eine Brennstoffzelle.

In der Druckschrift EP 1 238 881 A1 ist ein Schienenfahrzeug angegeben. Dokument US 2016/297451 A1 offenbart ein Fahrzeug gemäß Oberbegriff des Anspruchs 1.

Eine zu lösende Aufgabe liegt darin, einen Transportschlauch anzugeben, mit dem Wasserstoffgas sicher und zuverlässig über einen Wagenübergang eines Zuges transportiert werden kann. Diese Aufgabe wird unter anderem durch ein Fahrzeug und durch ein Betriebsverfahren mit den Merkmalen der unabhängigen Patentansprüche gelöst. Bevorzugte Weiterbildungen sind Gegenstand der übrigen Ansprüche.

Bei dem hier beschriebenen Fahrzeug wird insbesondere ein Transportschlauch für Wasserstoffgas zwischen benachbarten Fahrzeugteilen verwendet. Der Transportschlauch weist einen Außenschlauch auf, der bevorzugt Druckluft führt. In dem Außenschlauch befindet sich ein Innenschlauch für Wasserstoffgas.

Gemäß zumindest einer Ausführungsform handelt es sich bei dem Fahrzeug um ein Schienenfahrzeug wie einen Zug. Insbesondere ist das Fahrzeug ein Regionalzug, auch als Commuter Train bezeichnet.

Gemäß zumindest einer Ausführungsform umfasst das Fahrzeug mehrere Fahrzeugteile. Die Fahrzeugteile sind längs einer Fahrtrichtung des Fahrzeugs miteinander verbunden. Die Fahrzeugteile können gegeneinander beweglich sein. Eine Verbindung zwischen den Fahrzeugteilen kann bestimmungsgemäß lösbar sein, insbesondere über Kupplungen. Alternativ ist es möglich, dass die Fahrzeugteile fest miteinander verbunden sind und die einzelnen Fahrzeugteile nicht zum eigenständigen Betrieb eingerichtet sind. Eine Verbindung der Fahrzeugteile erfolgt dann beispielsweise über Drehgestelle. Die Fahrzeugteile können Waggons sein.

Gemäß zumindest einer Ausführungsform umfasst das Fahrzeug eine oder mehrere Brennstoffzellen. Die mindestens eine Brennstoffzelle ist zur Erzeugung von elektrischem Strom mittels Umsetzung von Wasserstoff und Sauerstoff zu Wasser eingerichtet. Der Wasserstoff wird aus einem Trägergas heraus umgesetzt. Das Trägergas umfasst bevorzugt den Wasserstoff. Bei dem Trägergas für Wasserstoff handelt es sich beispielsweise um Wasserstoffgas, kurz H₂. Ebenso ist es möglich, dass als Trägergas für den Wasserstoff Erdgas und/oder Methan und/oder Reformatgas dient. Der Sauerstoff für die Brennstoffzelle entstammt bevorzugt der Umgebungsluft, kann aber auch als reiner Sauerstoff zugeführt werden. Insbesondere ist es möglich, dass der Sauerstoff zum Betreiben der Brennstoffzelle aus einer Luftleitung wie einer Hauptdruckluftleitung zum Betrieb von Bremsen des Fahrzeugs stammt.

Gemäß zumindest einer Ausführungsform umfasst das Fahrzeug einen oder mehrere Transportschläuche. Der mindestens eine Transportschlauch ist insbesondere zwischen den Fahrzeugteilen angeordnet und zum Transport eines Trägergases für den Wasserstoff zur Brennstoffzelle eingerichtet. Der Transportschlauch ist mechanisch flexibel und insbesondere um mindestens 10° oder um mindestens 20° reversibel biegbar, bezogen auf eine Längsachse des Transportschlauchs in ungebogenem, geradem Zustand. Es ist möglich, dass der Transportschlauch eine oder mehrere Verzweigungen und/oder mehrere Anschlüsse aufweist.

Gemäß zumindest einer Ausführungsform umfasst der Transportschlauch einen Außenschlauch. In dem Außenschlauch befindet sich ein Innenschlauch für das Trägergas für den Wasserstoff. Der Transportschlauch ist zwischen dem Außenschlauch und dem Innenschlauch zum Transport eines weiteren Gases wie Druckluft eingerichtet. Das weitere Gas enthält bevorzugt Sauerstoff, der für die Brennstoffzelle genutzt werden kann.

Der Transportschlauch ist bevorzugt Teil einer Hauptdruckluftleitung des Fahrzeugs.

In mindestens einer Ausführungsform umfasst das Fahrzeug mehrere Fahrzeugteile, die längs einer Fahrtrichtung miteinander verbunden sind. Mindestens eine Brennstoffzelle ist zur Erzeugung eines elektrischen Stroms mittels Umsetzung von Wasserstoff und Sauerstoff zu Wasser eingerichtet. Mindestens ein Transportschlauch zwischen den Fahrzeugteilen dient zum Transport eines Trägergases für den Wasserstoff zur Brennstoffzelle. Der Transportschlauch ist mechanisch flexibel und um mindestens 10° reversibel biegbar. Der Transportschlauch umfasst einen Außenschlauch, in dem ein Innenschlauch für das Trägergas für den Wasserstoff liegt. Der Transportschlauch ist zwischen dem Außenschlauch und dem Innenschlauch zum Transport eines weiteren Gases eingerichtet.

Regionalzüge, auch als Commuter Trains bezeichnet, haben für die Druckluftsysteme, wie das pneumatische Bremssystem, eine Hauptdruckluftleitung, kurz HL. Die HL verbindet jeden Wagen im Teilerverband oder Zugverband miteinander. Für den Wasserstofftransport über den Wagenübergang hinweg wird als Basis vorliegend die schon vorhandene Hauptdruckluftleitung verwendet oder durch den hier beschriebenen Transportschlauch ersetzt oder ergänzt.

Im inneren Schlauch wird somit Wasserstoff geführt und im äußeren Schlauch Luftsauerstoff. Sauerstoff und Wasserstoff bilden bei Kontakt ein explosives Gemisch, weshalb beide Gase räumlich getrennt voneinander geführt werden müssen. Eine erste räumliche Trennung erfolgt durch den inneren Schlauch, der wasserstoffundurchlässig ist und beispielsweise aus Perfluoralkoxy-Polymeren, kurz PFA, gefertigt ist. Um eine zusätzliche Wasserstoffundurchlässigkeit zu gewährleisten, wird der innere Schlauch bevorzugt mit einer Keramikschicht überzogen, deren Porendurchmesser kleiner ist als der von Wasserstoffmolekülen. Ein Wasserstoffmolekül hat einen Durchmesser von ungefähr 0,24 nm.

Im äußeren Schlauch erfolgt somit der Transport des Sauerstoffs, welcher einen deutlich größeren Moleküldurchmesser aufweist als Wasserstoff. Damit kann eine absolute räumliche Trennung beider Gase in dem Transportschlauch gewährleistet werden. Es lassen sich also durch eine vergleichsweise kleine Modifikation des aktuellen Druckluftschlauchs in Zügen beide Gase ohne größere technische Änderungen am Fahrzeug in einem einzigen Schlauch sicher transportieren.

Somit können neue Wasserstoffleitungswege mit vergleichsweise geringen Änderungen der gegebenen Fahrzeugarchitektur und der gegebenen Fahrzeugkomponenten in das Fahrzeug integriert werden. Trotz Einbindung einer neuen Technologie bleibt das vorhandene Fahrzeugkonzept annähernd unverändert. Die im Wesentlichen einzige Veränderung ist der Ersatz des aktuellen Druckluftschlauchs durch den hier beschriebenen Transportschlauch. Die damit verbundenen Kosten sind, verglichen mit einer kompletten Neuplanung und Neuinstallation von Wasserstoffrohrsystemen, gering.

Gemäß zumindest einer Ausführungsform weist der Innenschlauch an einer Außenseite eine oder mehrere Beschichtungen auf. Die mindestens eine Beschichtung ist undurchlässig für H₂-Gas.

Gemäß zumindest einer Ausführungsform umfasst die Beschichtung mindestens eine Keramik. Bevorzugt besteht die Keramik aus einem Titanoxid oder umfasst ein Titanoxid. Die Keramik kann Titandioxid sein.

Gemäß zumindest einer Ausführungsform weist die Beschichtung eine Dicke von mindestens 2 nm oder mindestens 10 nm oder mindestens 20 nm auf. Alternativ oder zusätzlich liegt die Dicke der Beschichtung bei höchstens 200 nm oder höchstens 100 nm oder höchstens 50 nm.

Gemäß zumindest einer Ausführungsform weist die Beschichtung eine mittlere Porengröße auf, die bei höchstens 0,24 nm oder höchstens 0,2 nm oder höchstens 0,1 nm liegt. Es ist möglich, dass die Beschichtung frei von Poren ist und eine durchgängige, dichte Schicht darstellt.

Gemäß zumindest einer Ausführungsform weist der Innenschlauch einen Durchmesser von mindestens 0,5 cm oder mindestens 1 cm oder mindestens 4 cm auf. Alternativ oder zusätzlich liegt der Innendurchmesser des Innenschlauchs bei höchstens 15 cm oder höchstens 6 cm oder höchstens 3 cm.

Gemäß zumindest einer Ausführungsform weist der Außenschlauch einen Innendurchmesser von mindestens 2 cm oder mindestens 2,5 cm oder mindestens 3 cm auf. Alternativ oder zusätzlich liegt der Innendurchmesser des Außenschlauchs bei höchstens 25 cm oder höchstens 15 cm oder höchstens 10 cm oder höchstens 5 cm.

Gemäß zumindest einer Ausführungsform weist der Innenschlauch eine Wandstärke von mindestens 0,15 mm oder mindestens 0,25 mm oder mindestens 0,5 mm auf. Alternativ oder zusätzlich liegt die Wandstärke des Innenschlauchs bei höchstens 3 mm oder höchstens 2 mm oder höchstens 1 mm oder höchstens 0,5 mm.

Gemäß zumindest einer Ausführungsform umfasst das Fahrzeug mehrere Brennstoffzellen. Die Brennstoffzellen sind über mehrere Fahrzeugteile hinweg verteilt. Ferner umfasst das Fahrzeug einen oder mehrere Trägergastanks für das Trägergas für den Wasserstoff. Insbesondere ist genau ein Trägergastank vorhanden, der auf einen der Fahrzeugteile beschränkt ist. Das Trägergas für den Wasserstoff wird über den Transportschlauch zwischen den Fahrzeugteilen transportiert.

Gemäß zumindest einer Ausführungsform liegt der Transportschlauch stellenweise zwischen den Fahrzeugteilen nach außen frei. Das heißt, der Transportschlauch ist zumindest zeitweise einer Umgebungsluft und/oder einer Umgebungsstrahlung ausgesetzt. Mit anderen Worten kann der Transportschlauch Witterungseinflüssen wie Regen oder Schnee und UV-Strahlung aus der Sonnenstrahlung ausgesetzt sein. Der Transportschlauch ist widerstandsfähig gegenüber solchen Umwelteinflüssen. Beispielsweise weist der Transportschlauch im bestimmungsgemäßen Gebrauch eine Lebensdauer von mindestens 30 Jahren auf.

Gemäß zumindest einer Ausführungsform wird das Trägergas für den Wasserstoff, insbesondere H₂-Gas, mit einem Druck von mindestens 3 bar oder mindestens 5 bar oder mindestens 7 bar und/oder von höchstens 20 bar oder höchstens 16 bar oder 10 bar durch den Transportschlauch geleitet. Insbesondere liegt dieser Druck bei ungefähr 8 bar.

Gemäß zumindest einer Ausführungsform ist der Transportschlauch für einen Betriebstemperaturbereich von -30 °C bis 80 °C oder mehr vorgesehen. Es ist möglich, dass der Betriebstemperaturbereich eine Temperaturspanne von -50 °C bis 120 °C abdeckt.

Gemäß zumindest einer Ausführungsform weist das Wellrohr eine Länge von mindestens 0,2 m oder mindestens 0,4 m auf. Alternativ oder zusätzlich liegt diese Länge bei höchstens 50 m oder höchstens 30 m oder höchstens 5 m oder höchstens 1,5 m oder höchstens 0,7 m. Insbesondere liegt die Länge des Wellrohrs um 0,5 m.

Darüber hinaus wird ein Betriebsverfahren für ein solches Fahrzeug angegeben. Merkmale des Fahrzeugs sind auch für das Betriebsverfahren offenbart und umgekehrt.

In mindestens einer Ausführungsform des Verfahrens wird die mindestens eine Brennstoffzelle betrieben, um elektrischen Strom zu erzeugen und damit das Fahrzeug zu bewegen. Mit anderen Worten verfügt das Fahrzeug über einen Brennstoffzellenantrieb. Der Brennstoffzellenantrieb kann der einzige Antrieb des Fahrzeugs sein oder es liegt noch ein weiterer Antrieb vor.

Gemäß zumindest einer Ausführungsform wird zum Betrieb der Brennstoffzelle das Trägergas für den Wasserstoff, insbesondere H₂-Gas, zwischen den Fahrzeugteilen durch den Transportschlauch hindurch transportiert.

Gemäß zumindest einer Ausführungsform liegt ein Betriebsdruck des Innenschlauchs mit einer Toleranz von höchstens 40 % oder höchstens 20 % oder höchstens 10 % und/oder von höchstens 1 bar oder höchstens 0,5 bar bei einem Betriebsdruck des Außenschlauchs. Das heißt, zwischen dem Innenschlauch und dem Außenschlauch liegt kein oder kein großer Druckunterschied vor. Somit kann der Innenschlauch vergleichsweise dünnwandig gestaltet werden und kann relativ zu einer äußeren Umgebung vergleichsweise druckfrei betrieben werden, da ein Innendruck des Innenschlauchs ungefähr einem Außendruck entspricht. Es ist möglich, dass durch eine Sicherheitsschaltung die Betriebsdrücke im Innenschlauch und im Außenschlauch aneinander angepasst werden.

Gemäß zumindest einer Ausführungsform wird zwischen dem Innenschlauch und dem Außenschlauch gefilterte Luft transportiert. Die gefilterte Luft dient beispielsweise auch zum Betrieb der Bremsen des Fahrzeugs. Bei der gefilterten Luft handelt es sich bevorzugt um das Trägergas für den Sauerstoff für die Brennstoffzelle. Der Transportschlauch wird damit bevorzugt auch als Teil der Hauptdruckluftleitung des Fahrzeugs betrieben.

Nachfolgend werden ein hier beschriebenes Fahrzeug und ein hier beschriebenes Verfahren unter Bezugnahme auf die Zeichnung anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
- Figuren 1, 5, 6 und 7: schematische Schnittdarstellungen von Ausführungsbeispielen von hier beschriebenen Fahrzeugen, und
- Figuren 2, 3 und 4: schematische Schnittdarstellungen von Ausführungsbeispielen von Transportschläuchen für hier beschriebene Fahrzeuge.

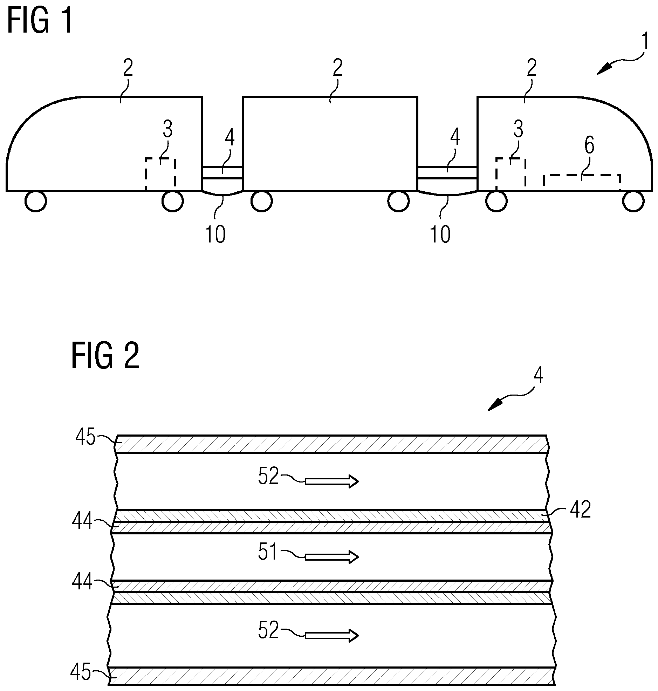

In Figur 1 ist ein Ausführungsbeispiel eines Fahrzeugs 1 gezeigt. Das Fahrzeug 1 ist ein Zug mit mehreren Fahrzeugteilen 2. Die Fahrzeugteile 2 sind durch aneinander kuppelbare Waggons gebildet. Eine mechanische Verbindung zwischen den Fahrzeugteilen 2 ist über Kopplungen 10 erzielt.

Zumindest einige der Fahrzeugteile 2 umfassen jeweils eine Brennstoffzelle 3 zum Antrieb des Fahrzeugs 1. In zumindest einem der Fahrzeugteile 2 ist ein Trägergastank 6 für Wasserstoffgas vorhanden. Zum Transport des Wasserstoffgases über die Fahrzeugteile 2 hinweg zu den jeweiligen Brennstoffzellen 3 sind zumindest zwischen den Fahrzeugteilen 2 jeweils Transportschläuche 4 vorhanden.

Die Transportschläuche 4 sind hinreichend mechanisch flexibel, um Bewegungen der Fahrzeugteile 2 relativ zueinander während der Fahrt und während eines Koppelvorgangs ausgleichen zu können. Ferner sind die Transportschläuche 4 witterungsbeständig und erfüllen die für den Betrieb des Fahrzeugs 1 notwendigen Voraussetzungen.

In Figur 2 ist ein Ausführungsbeispiel für den Transportschlauch 4 illustriert. Der Transportschlauch 4 umfasst einen Innenschlauch 44, in dem ein Trägergas 51 für Wasserstoff geführt wird. Bei dem Trägergas 51 handelt es sich beispielsweise um H₂-Gas. Der Innenschlauch ist beispielsweise aus einem Perfluoralkoxy-Polymer, kurz PFA, wie Perfluorvinylpropylether.

Besonders bevorzugt ist eine Außenseite des Innenschlauchs 44 mit einer Beschichtung 42 versehen. Bei der Beschichtung 42 handelt es sich um eine keramische Schicht, beispielsweise basierend auf einem Titanoxid. Die Beschichtung 42 weist insbesondere eine Dicke von ungefähr 20 nm auf. Eine Porengröße der Beschichtung 42 ist so gewählt, dass die Beschichtung 42 undurchlässig für H₂-Gas ist.

Ferner umfasst der Transportschlauch 4 einen Außenschlauch 45, beispielsweise einen Kunststoffschlauch. Ein solcher Kunststoffschlauch für den Außenschlauch 45 kann durch ein Gewebe, etwa aus Metall, verstärkt sein. Der Innenschlauch 44 mit der Beschichtung 42 liegt innerhalb des Außenschlauchs 45, bevorzugt mittig innerhalb des Außenschlauchs 45.

Der Außenschlauch 45 ist dazu eingerichtet, ein Trägergas 52 für Sauerstoff zu führen. Das Trägergas 52 ist insbesondere gereinigte Druckluft. Die Trägergase 51, 52 werden bevorzugt mit näherungsweise dem gleichen Druck geführt, sodass ein Überdruck oder Unterdruck des Innenschlauchs 44 gegenüber dem Außenschlauch 45 vernachlässigbar sein kann.

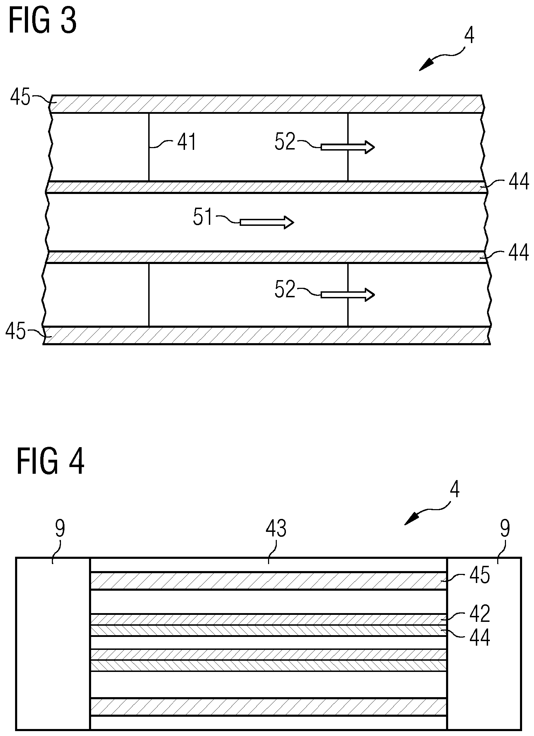

In Figur 3 ist gezeigt, dass optional eine Verstrebung 41 zwischen dem Außenschlauch 45 und dem Innenschlauch 44 vorliegen kann. Eine solche Verstrebung 41 ist beispielsweise speichenförmig gestaltet. Mittels der Verstrebung 41 ist sicherstellbar, dass der Innenschlauch 44 in einer definierten Lage innerhalb des Außenschlauchs 45 verläuft. Eine solche Verstrebung 41 kann auch in allen anderen Ausführungsbeispielen vorhanden sein.

Beim Ausführungsbeispiel des Transportschlauchs 4, wie in Figur 4 gezeigt, sind optional Endstücke 9 vorhanden. Über die Endstücke 9 ist der Transportschlauch 4 bevorzugt anschließbar und befestigbar. Die Endstücke 9 können Ventile enthalten, mit denen auch der nicht angeschlossene Transportschlauch 4 gasdicht sein kann. Solche Endstücke 9 können auch in allen anderen Ausführungsbeispielen vorhanden sein.

Weiterhin ist es möglich, dass insbesondere außen an dem Außenschlauch 45 eine Umhüllung 43 vorhanden ist. Die Umhüllung 43 schließt beispielsweise radial bündig mit den Endstücken 9 ab. Entsprechende Umhüllungen 43 und Endstücke 9 können in allen anderen Ausführungsbeispielen genauso verwendet werden.

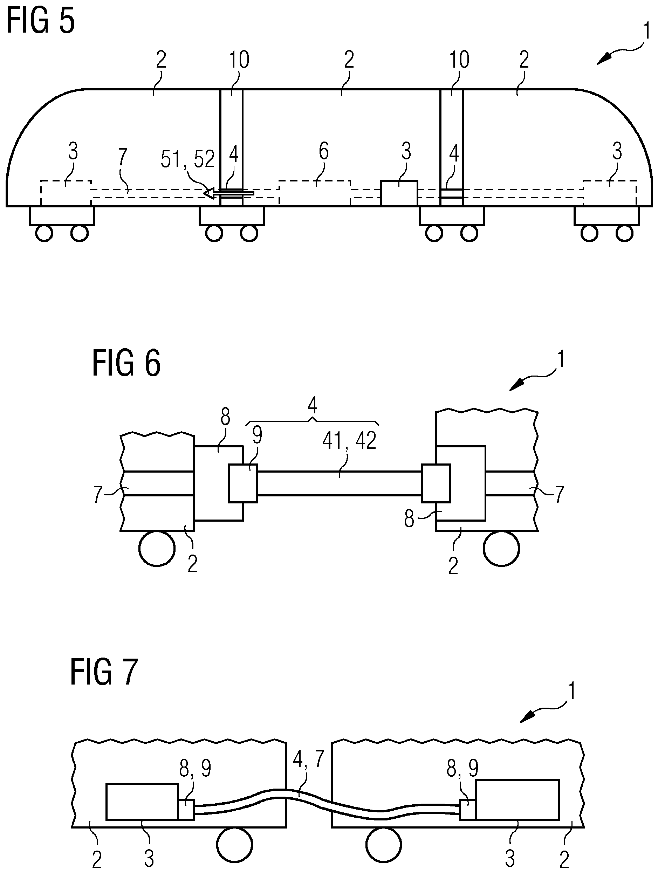

Beim Ausführungsbeispiel der Figur 5 sind die Fahrzeugteile 2 des Fahrzeugs 1 über Drehgestelle aneinander gekoppelt. Die Fahrzeugteile 2 sind bestimmungsgemäß nicht dazu eingerichtet, regelmäßig voneinander separiert zu werden. Wiederum ist ein Trägergastank 6 vorhanden, von dem ausgehend die Brennstoffzellen 3 über Wasserstoffleitungen 7 mit einem Trägergas 51 für Wasserstoff, insbesondere H₂-Gas, versorgt werden. Ein Trägergas 52 für Sauerstoff wird zum Beispiel der Umgebungsluft entnommen oder, bevorzugt, einer Hauptdruckluftleitung des Fahrzeugs 1. Das Fahrzeug 1 ist insbesondere ein Regionalzug.

In Figur 6 ist illustriert, dass die Wasserstoffleitungen 7 jeweils durch ein Ventil 8 abgeschlossen sind. Das Ventil 8 kann innerhalb der Fahrzeugteile 2 angebracht sein oder sich außen an einem Fahrzeugteil 2 befinden. Entlang der Fahrzeugteile 2 aufeinanderfolgende Ventile 8 sind über den Transportschlauch 4 miteinander verbunden. Dazu verfügt der Transportschlauch 4 bevorzugt über die Endstücke 9, die auf die Ventile 8 abgestimmt sind. Das heißt, der Transportschlauch 4 ist lediglich zur Überbrückung eines Zwischenraums zwischen den Fahrzeugteilen 2 eingerichtet.

Eine mechanische Verbindung und Kopplung zwischen den Fahrzeugteilen 2 ist zur Vereinfachung der Darstellung in Figur 6 nicht dargestellt, ebenso wenig wie in Figur 7.

Demgegenüber erstreckt sich der Transportschlauch 4 gemäß Figur 7 durchgehend oder im Wesentlichen durchgehend zwischen den Brennstoffzellen 3 und/oder dem nicht gezeichneten Trägergastank. Das heißt, der Transportschlauch 4 zwischen den Fahrzeugteilen 2 kann einstückig mit der Wasserstoffleitung 7 innerhalb der Fahrzeugteile 2 gestaltet sein. Damit können Ventile an einem Zwischenbereich zwischen den Fahrzeugteilen 2 entfallen.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1: Fahrzeug
- 2: Fahrzeugteil
- 3: Brennstoffzelle
- 4: Transportschlauch
- 41: Verstrebung
- 42: Beschichtung
- 43: Umhüllung
- 44: Innenschlauch
- 45: Außenschlauch
- 51: Trägergas für Wasserstoff
- 52: Trägergas für Sauerstoff
- 6: Trägergastank
- 7: Wasserstoffleitung
- 8: Ventil
- 9: Endstück
- 10: Kopplung

## Patentansprüche

1. Fahrzeug (1) mit
- mehreren Fahrzeugteilen (2), die längs einer Fahrtrichtung des Fahrzeugs (1) miteinander verbunden sind,
- mindestens einer Brennstoffzelle (3) zur Umsetzung von Wasserstoff und Sauerstoff zu Wasser, und **gekennzeichnet durch**
- mindestens einen Transportschlauch (4) zwischen den Fahrzeugteilen (2) zum Transport eines Trägergases (51) für den Wasserstoff zur Brennstoffzelle (3), wobei
- der Transportschlauch (4) mechanisch flexibel und damit um mindestens 10° reversible biegbar ist,
- der Transportschlauch (4) einen Außenschlauch (45) umfasst, in dem ein Innenschlauch (44) für das Trägergas (51) für den Wasserstoff liegt, und
- der Transportschlauch (4) zwischen dem Außenschlauch (45) und dem Innenschlauch (44) zum Transport eines weiteren Gases (52) eingerichtet ist.

2. Fahrzeug (1) nach dem vorhergehenden Anspruch, bei dem das weitere Gas (52) Luft ist und der Transportschlauch (4) ein Teil einer Hauptluftleitung des Fahrzeugs (1) ist.

3. Fahrzeug (1) nach einem der vorhergehenden Ansprüche, bei dem der Innenschlauch (44) aus zumindest einem fluorierten Kunststoff ist.

4. Fahrzeug (1) nach einem der vorhergehenden Ansprüche, das ein Zug ist, der mehrere der Brennstoffzellen (3) umfasst,
ferner umfassend einen Trägergastank (6) für das Trägergas (51) für den Wasserstoff,
wobei die Brennstoffzellen (3) über mehrere der Fahrzeugteile (2) verteilt angeordnet sind, und
wobei der Trägergastank (6) in nur einem der Fahrzeugteile (2) untergebracht ist, sodass der Transportschlauch (4) dazu eingerichtet ist, das Trägergas (51) für den Wasserstoff von dem Fahrzeugteil (2) mit dem Trägergastank (6) aus auf die anderen Fahrzeugteile (2) zu verteilen.

5. Fahrzeug (1) nach einem der vorhergehenden Ansprüche, bei dem der Transportschlauch (4) nach außen freiliegt, sodass der Transportschlauch (4) zumindest zeitweise einer Umgebungsluft und einer Umgebungsstrahlung ausgesetzt ist.

6. Fahrzeug (1) nach einem der vorhergehenden Ansprüche, bei dem der Innenschlauch (44) an einer Außenseite mindestens eine Beschichtung (42) umfasst, die undurchlässig für H₂-Gas ist,
wobei die Beschichtung (42) mindestens eine Keramik umfasst.

7. Fahrzeug (1) nach dem vorhergehenden Anspruch,
bei dem die Keramik ein Titanoxid umfasst,
wobei eine Dicke der Beschichtung (42) höchstens 100 nm beträgt und eine mittlere Porengröße der Beschichtung (42) bei höchstens 0,2 nm liegt.

8. Fahrzeug (1) nach einem der vorhergehenden Ansprüche, bei dem
- das Trägergas (51) für den Wasserstoff H₂-Gas ist,
- der Transportschlauch (4) mindestens für einen Betriebstemperaturbereich von -30 °C bis 80 °C vorgesehen ist,
- der Transportschlauch (4) zwischen den Fahrzeugteilen (2) eine Länge zwischen einschließlich 0,2 m und einschließlich 1,5 m aufweist,
- der Innenschlauch (44) einen Innendurchmesser zwischen einschließlich 1 cm und einschließlich 6 cm aufweist und ein Innendurchmesser des Außenschlauchs (45) zwischen einschließlich 2,5 cm und einschließlich 25 cm liegt, und
- eine Wandstärke des Innenschlauchs (44) zwischen einschließlich 0,15 mm und einschließlich 2 mm liegt.

9. Betriebsverfahren, mit dem ein Fahrzeug (1) nach einem der vorherigen Ansprüche betrieben wird,
wobei die zumindest eine Brennstoffzelle (3) betrieben wird, um das Fahrzeug (1) zu bewegen, und
wobei zum Betrieb der Brennstoffzelle (3) das Trägergas (51) für den Wasserstoff zwischen den Fahrzeugteilen (2) durch den Transportschlauch (4) hindurch transportiert wird.

10. Betriebsverfahren nach dem vorhergehenden Anspruch, wobei ein Betriebsdruck des Innenschlauchs (44) mit einer Toleranz von höchstens 20 % und/oder von höchstens 1 bar gleich einem Betriebsdruck des Außenschlauchs (45) ist, und
wobei zwischen dem Innenschlauch (44) und dem Außenschlauch (45) gefilterte Luft transportiert wird, die das Trägergas (52) für den Sauerstoff für die Brennstoffzelle (3) ist, und wobei das Trägergas (51) für den Wasserstoff mit einem Druck von mindestens 3 bar und höchstens 16 bar durch den Transportschlauch (4) geleitet wird.

## Claims

1. Vehicle (1) with
- a plurality of vehicle parts (2), which are interconnected along a direction of travel of the vehicle (1),
- at least one fuel cell (3) for converting hydrogen and oxygen into water, and **characterised by**
- at least one transport hose (4) between the vehicle parts (2) for transporting a carrier gas (51) for the hydrogen to the fuel cell (3),
wherein
- the transport hose (4) is mechanically flexible and therefore can be reversibly bent by at least 10°,
- the transport hose (4) comprises an outer hose (45), in which an inner hose (44) for the carrier gas (51) for the hydrogen lies, and
- the transport hose (4) is configured between the outer hose (45) and the inner hose (44) for transporting a further gas (52) .

2. Vehicle (1) according to the preceding claim, in which the further gas (52) is air and the transport hose (4) is part of a main air line of the vehicle (1).

3. Vehicle (1) according to one of the preceding claims, in which the inner hose (44) is made of at least one fluorinated plastic.

4. Vehicle (1) according to one of the preceding claims, which is a train, which comprises a plurality of the fuel cells (3),
further comprising a carrier gas tank (6) for the carrier gas (51) for the hydrogen,
wherein the fuel cells (3) are arranged such that they are distributed over a plurality of the vehicle parts (2), and wherein the carrier gas tank (6) is accommodated in only one of the vehicle parts (2), meaning that the transport hose (4) is configured to distribute the carrier gas (51) for the hydrogen out from the vehicle part (2) with the carrier gas tank (6) to the other vehicle parts (2).

5. Vehicle (1) according to one of the preceding claims, in which the transport hose (4) is exposed on the outside, meaning that the transport hose (4) is exposed to ambient air and ambient radiation, at least for a time.

6. Vehicle (1) according to one of the preceding claims, in which the inner hose (44), on an outer side, comprises at least one coating (42) that is impermeable for H₂ gas, wherein the coating (42) comprises at least one ceramic.

7. Vehicle (1) according to the preceding claim,
in which the ceramic comprises a titanium oxide,
wherein a thickness of the coating (42) amounts to a maximum of 100 nm and an average pore size of the coating (42) lies at a maximum of 0.2 nm.

8. Vehicle (1) according to one of the preceding claims, in which
- the carrier gas (51) for the hydrogen is H₂ gas,
- the transport hose (4) is provided at least for an operating temperature range from -30 °C to 80 °C,
- the transport hose (4) between the vehicle parts (2) has a length between 0.2 m and 1.5 m inclusive,
- the inner hose (44) has an inner diameter between 1 cm and 6 cm inclusive, and an inner diameter of the outer hose (45) lies between 2.5 cm and 25 cm inclusive, and
- a wall thickness of the inner hose (44) lies between 0.15 mm and 2 mm inclusive.

9. Operating method, with which a vehicle (1) according to one of the preceding claims is operated,
wherein the at least one fuel cell (3) is operated in order to move the vehicle (1), and
wherein for the operation of the fuel cells (3) the carrier gas (51) for the hydrogen is transported between the vehicle parts (2) through the transport hose (4).

10. Operating method according to the preceding claim, wherein an operating pressure of the inner hose (44) is equal to an operating pressure of the outer hose (45) with a tolerance of a maximum of 20 % and/or a maximum of 1 bar, and wherein filtered air, which is the carrier gas (52) for the oxygen for the fuel cell (3), is transported between the inner hose (44) and the outer hose (45), and
wherein the carrier gas (51) for the hydrogen is conducted through the transport hose (4) with a pressure of at least 3 bar and a maximum of 16 bar.

## Revendications

1. Véhicule (1) comprenant
- plusieurs parties (2) de véhicule, qui sont reliées les unes aux autres suivant une direction de circulation du véhicule (1),
- au moins une pile (3) à combustible pour la transformation de l'hydrogène et de l'oxygène en eau et **caractérisé par**
- au moins un conduit (4) souple de transport entre les parties (2) du véhicule pour le transport d'un gaz (51) porteur de l'hydrogène à la pile (3) à combustible,
dans lequel
- le conduit (4) souple de transport est flexible mécaniquement et peut ainsi être plié de manière réversible d'au moins 10°,
- le conduit (4) souple de transport comprend un conduit (45) souple extérieur, dans lequel il y a un conduit (44) intérieur pour le gaz (51) porteur de l'hydrogène, et
- le conduit (4) souple de transport entre le conduit (45) souple extérieur et le conduit (44) souple intérieur est conçu pour le transport d'un autre gaz (52).

2. Véhicule (1) suivant la revendication précédente, dans lequel l'autre gaz (52) est l'air et le conduit (4) souple de transport fait partie d'un conduit principal d'air du véhicule (1).

3. Véhicule (1) suivant l'une des revendications précédentes, dans lequel le conduit (44) souple intérieur est en au moins une matière plastique fluorée.

4. Véhicule (1) suivant l'une des revendications précédentes, dans lequel c'est un train, qui comprend plusieurs des piles (3) à combustible,
comprenant en outre un réservoir (6) de gaz porteur pour le gaz (51) porteur de l'hydrogène,
dans lequel les piles (3) à combustible sont réparties sur plusieurs des parties (2) du véhicule, et
dans lequel le réservoir (6) de gaz porteur n'est logé que dans l'une des parties (2) du véhicule, de sorte que le conduit (4) souple de transport est conçu pour répartir le gaz (51) porteur de l'hydrogène de la partie (2) du véhicule ayant le réservoir (6) de gaz porteur sur les autres parties (2) du véhicule.

5. Véhicule (1) suivant l'une des revendications précédentes, dans lequel le conduit (4) souple de transport est à découvert vers l'extérieur, de sorte que le conduit (4) souple de transport est soumis, au moins de temps à temps, à l'air ambiant et à un rayonnement ambiant.

6. Véhicule (1) suivant l'une des revendications précédentes, dans lequel le conduit (44) souple intérieur comprend au moins un revêtement (42) sur la face extérieure, qui est imperméable au H₂ gazeux,
dans lequel le revêtement (42) comprend au moins une céramique.

7. Véhicule (1) suivant la revendication précédente, dans lequel la céramique comprend de l'oxyde de titane,
dans lequel une épaisseur du revêtement (42) est au plus de 100 nm et une dimension moyenne de pore du revêtement (42) est au plus de 0,2 nm.

8. Véhicule (1) suivant l'une des revendications précédentes, dans lequel
- le gaz (51) porteur de l'hydrogène est de l'H₂ gazeux,
- le conduit (4) souple de transport est prévu pour une plage de températures de fonctionnement de - 30°C à 80°C,
- le conduit (4) souple de transport a, entre les parties (2) du véhicule, une longueur comprise entre et y compris 0,2 m et y compris 1,5 m,
- le conduit (44) souple intérieur a un diamètre intérieur entre y compris 1 cm et y compris 6 cm et un diamètre intérieur du conduit (45) souple extérieur est entre y compris 2,5 cm et y compris 25 cm, et
- une épaisseur de paroi du conduit (44) souple intérieur est entre y compris 0,15 mm et y compris 2 mm.

9. Procédé de fonctionnement, par lequel on fait fonctionner un véhicule (1) suivant l'une des revendications précédentes,
dans lequel on fait fonctionner la au moins une pile (3) à combustible pour faire se mouvoir le véhicule (1), et
dans lequel, pour faire fonctionner la pile (3) à combustible, on transporte le gaz (51) porteur de l'hydrogène entre les parties (2) du véhicule en passant par le conduit (4) souple de transport.

10. Procédé de fonctionnement suivant la revendication précédente, dans lequel une pression de fonctionnement du conduit (44) souple intérieur est, avec une tolérance de 20 % au plus et/ou de 1 bar au plus, égale à une pression de fonctionnement du conduit (45) souple extérieur, et
dans lequel on transporte, entre le conduit (44) souple intérieur et le conduit (45) souple extérieur de l'air filtré, qui est le gaz (52) porteur de l'oxygène pour la pile (3) à combustible, et
dans lequel on fait passer le gaz (51) porteur de l'hydrogène à une pression d'au moins 3 bar et d'au plus 16 bar dans le conduit (4) souple de transport.
